# EUROPEAN PATENT APPLICATION

(11) **EP 1 231 806 A1**
(43) Date of publication of application: **14.08.2002**
(21) Application number: 02001870.1
(22) Date of filing: 28.01.2002
(51) Int. Cl.: H04Q 7/38

(54) **Channel structure for data transmission**

(30) Priority: 12.02.2001 US 781838
(71) Applicant: MOTOROLA, INC., Schaumburg, IL 60196 (US)
(72) Inventor: Jiangnan, Jason Chen, Darien, Illinois 60561 (US); Schaffner, Michael, Palatine, Illinois 60067 (US)
(74) Representative: Gibson, Sarah Jane

(57) **Abstract**

The reverse channel AISCH (R-AISCH) is multiplexed in a 1.25 ms slot within the reverse link control channel. In accordance with the preferred embodiment of the present invention the reverse pilot channel now contains PCSCH and Pilot symbols. These are spread with W₀ to complete transmission of the channel.

## Description

### Field of the Invention

The present invention relates generally to communication systems and in particular, to a channel structure for data transmission within such communication systems.

### Background of the Invention

Communication systems are well known and consist of many types including land mobile radio, cellular radiotelephone, personal communication systems, and other communication system types. Within a communication system, transmissions are conducted between a transmitting device and a receiving device over a communication resource, commonly referred to as a communication channel. To date, the transmissions have typically consisted of voice signals. More recently, however, it has been proposed to carry other forms of signals, including high-speed data signals. For ease of operation, it is preferable to have the data transmission capability overlay the existing voice communication capability, such that its operation is essentially transparent to the voice communication system while still utilizing the communication resources and other infrastructure of the voice communication system.

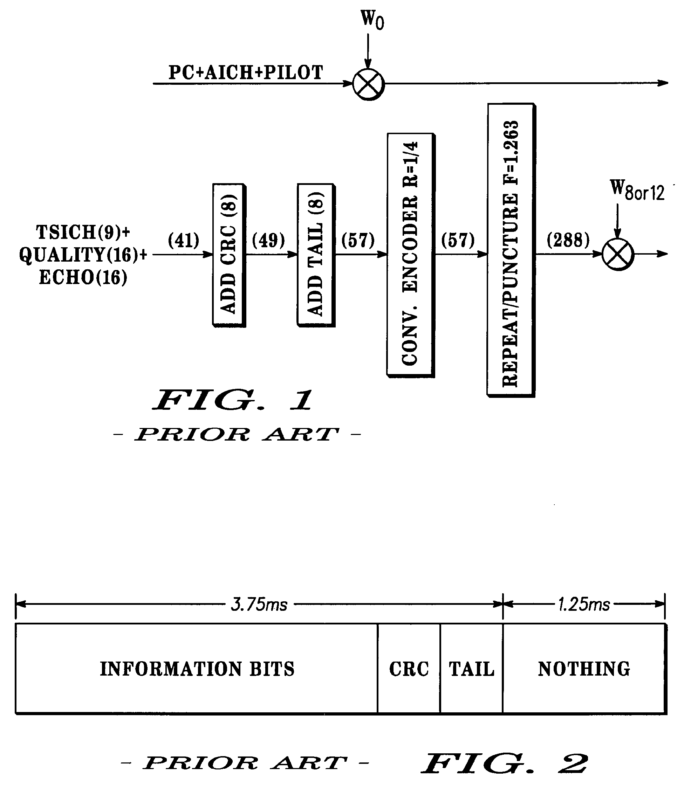

FIG. 1 illustrates a prior art reverse-link channel structure to accommodate cdma2000 1x-evolved high-speed integrated data and voice (1x-EVDV). Two physical channels are shown that use orthogonal spreading codes W₀ and W₈/W₁₂. As is evident the reverse-link pilot channel (W₀) contains power control bit(s) (PC), an Acknowledgment Indicator Channel (AICH), and the pilot channel (Pilot). The control channel (e.g., W₈ or W₁₂) transmits a Transmit Sector Indicator Channel (TSICH), a Quality indicator (Quality), and Echo Information for ARQ purposes (Echo). Information bits (containing TSICH, Quality, and Echo) have CRC bits and tail bits appended. The resulting signal is convolutionally encoded and repeated prior to Spreading with the appropriate Walsh Code (W₈ or W₁₂).

The resulting frame structure for the control channel is shown in FIG. 2. As is evident, the convolutionally encoded TSICH, Quality, and Echo bits are transmitted during the first 3.75 ms of the frame along with the CRC bits and tail bits. Nothing, however, is transmitted during the last 1.25 ms of the 5 ms frame. Although the above channel structure is appropriate for high-speed data transmission, a problem exists in that the prior-art pilot channel is not backward-compatible to the existing Telecommunications Industry Association Interim Standard 2000 (IS-2000) pilot channel structure. Therefore a need exists for a channel structure for data transmission that is backward-compatible to the existing IS-2000 channel structure.

### Brief Description of the Drawings

FIG. 1 illustrates two prior-art channel structures.

FIG. 2 illustrates a prior art frame structure for a control channel.

FIG. 3 illustrates a channel structure in accordance with the preferred embodiment of the present invention.

FIG. 4 illustrates a frame structure for a control channel in accordance with the preferred embodiment of the present invention.

FIG. 5 is a flow chart showing operation of a reverse-channel transmitter in accordance with the preferred embodiment of the present invention.

### Detailed Description of the Drawings

In order provide a channel structure for data transmission that is backward-compatible to the existing IS-2000 channel structure the reverse channel AISCH (R-AISCH) is multiplexed in a 1.25 ms slot within the reverse link control channel. In accordance with the preferred embodiment of the present invention the reverse pilot channel now contains PCSCH and Pilot symbols. These are spread with W₀ to complete transmission of the channel.

The present invention encompasses a control channel having a frame comprising a Reverse Transmitter Sector Indicator Subchannel (R-TSICH), wherein the R-TSICH is utilized by a mobile station to communicate a PN_OFFSET; a Reverse Quality Indicator subchannel (R-Quality), wherein R-Quality used to deliver of forward channel quality feedback; a Reverse Echo subchannel (R-Echo), wherein R-Echo is utilized to deliver forward link configuration information to assist in a fast cell site selection (FCSS) process; and a Reverse Acknowledgement Indicator Sub-channel (R-AISCH), wherein the R-AISCH is utilized for the indication of successful reception from the mobile station.

The present invention additionally encompasses a method for transmitting a control channel. The method comprises the steps of generating CRC bits for a Reverse Transmitter Sector Indicator Subchannel (R-TSICH), a Reverse Quality Indicator subchannel (R-Quality), and a Reverse Echo subchannel (R-Echo) to produce a Reverse Control Subchannel, wherein the R-TSICH is utilized by a mobile station to communicate a PN_OFFSET, R-Quality used to deliver of forward channel quality feedback, and R-Echo is utilized to deliver forward link configuration information to assist in a fast cell site selection (FCSS) process. A Reverse Acknowledgement Indicator Subchannel (R-AISCH) is then multiplexed onto the Reverse Control Subchannel, wherein the R-AISCH is utilized for the indication of successful reception from the mobile station.

The present invention additionally encompasses a control channel having a frame comprising a Reverse Transmitter Sector Indicator Subchannel (R-TSICH) existing in a 3.75 ms portion of the frame, wherein the R-TSICH is utilized by a mobile station to communicate a PN_OFFSET; a Reverse Quality Indicator subchannel (R-Quality) existing in the 3.75 ms portion of the frame, wherein R-Quality used to deliver of forward channel quality feedback; a Reverse Echo subchannel (R-Echo) existing in the 3.75 ms portion of the frame, wherein R-Echo is utilized to deliver forward link configuration information to assist in a fast cell site selection (FCSS) process; and a Reverse Acknowledgement Indicator Sub-channel (R-AISCH) existing in a 1.25 ms portion of the frame, wherein the R-AISCH is utilized for the indication of successful reception from the mobile station.

Prior to describing a transmitter and receiver in accordance with the preferred embodiment of the present invention the following definitions are provided to set the necessary background for utilization of the preferred embodiment of the present invention.

Reverse Pilot Channel - An unmodulated, direct-sequence spread spectrum signal transmitted by a CDMA base station or mobile station. A pilot channel provides a phase reference for coherent demodulation and may provide a means for signal strength comparisons between base stations for determining when to handoff.

R-PCSCH - Reverse Power Control Subchannel. A subchannel on the reverse link pilot channel with power control bit punctured on the fourth equally sized segment of one PCG time. The power control bit is used to signal the base station to increase or decrease its transmit power.

R-TSICH - Reverse Transmitter Sector Indicator Subchannel. A subchannel on the Reverse Control Channel used by the mobile station to communicate the PN_OFFSET optimum cell/sector for fast cell site selection in the Transmit Sector indicator message.

R-Quality - Reverse Quality Indicator subchannel. A subchannel used to deliver of forward channel quality feedback.

R-Echo - Reverse Echo subchannel. A subchannel used to deliver forward link configuration information (i.e. "echoing") to assist in fast cell site selection (FCSS) process.

R-AISCH - Reverse Acknowledgement Indicator Sub-channel (R-AISCH). R-AISCH is the acknowledgement feedback for the hybrid automatic repeat request (HARQ). HARQ is implemented using the well-known stop-and-wait ARQ protocol. In stop-and-wait, the transmitter will operate on the current block until the receiver has received it successfully. A one-bit acknowledgement feedback (R-AISCH) is used for the indication of successful reception from the mobile station. This bit with value one (1) can be sent out only after the decoder at the mobile has finished the decoding/combining and checked without frame error. Otherwise a zero (0) will be sent out. There are delays while decoding the received frame, sending out acknowledgement, detecting the acknowledgement, making decision if a retransmission is required, and sending out the retransmitted frame. The current design assumes a four (4) frame delay between the retransmissions, and this results in a four (4) channel stop-and-wait hybrid ARQ.

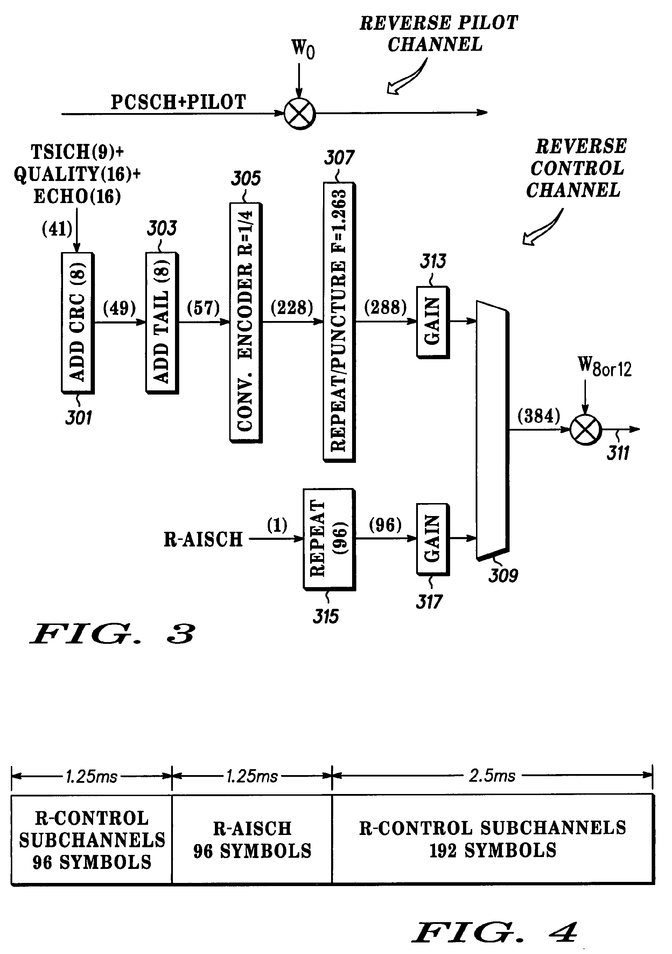

Turning now to the drawings, wherein like numerals designate like components, FIG. 3 illustrates a channel structure in accordance with the preferred embodiment of the present invention. As is evident, in the preferred embodiment of the present invention the reverse channel AISCH (R-AISCH) is no longer transmitted over the reverse pilot channel. Instead, the R-AISCH is multiplexed in a 1.25 ms slot within the reverse link control channel. In accordance with the preferred embodiment of the present invention the reverse pilot channel now contains PCSCH and Pilot symbols. These are spread with W₀ to complete transmission of the channel.

The transmitter for the reverse control channel comprises CRC bit generator 301, tail bit generator 303, convolutional encoder 305, symbol repeater/puncturer 307, gain multiplier 313, bit repeater 315, gain multiplier 317, multiplexer 309, and spreader 311. Operation of the reverse control channel transmitter occurs as follows: TSICH, Quality, and Echo bits enter CRC bit generator 301, where CRC bits are generated. Tail bits are then added by the tail bit generator 303. Convolutional encoding of the data takes place via convolutional encoder 305, and symbol repetition and puncturing takes place via repeater/puncturer 307. The resulting data is then multiplied by a gain factor by the gain multiplier 313 and passed to multiplexer 309 where R-AISCH symbols are multiplexed into the data. The R-AISCH bit is repeated by repeater 315 and multiplied by a gain factor by gain multiplier 317 to create the R-AISCH symbols which feed multiplexor 309. Finally, the data output from multiplexor 309 is spread via spreader 311 and transmitted.

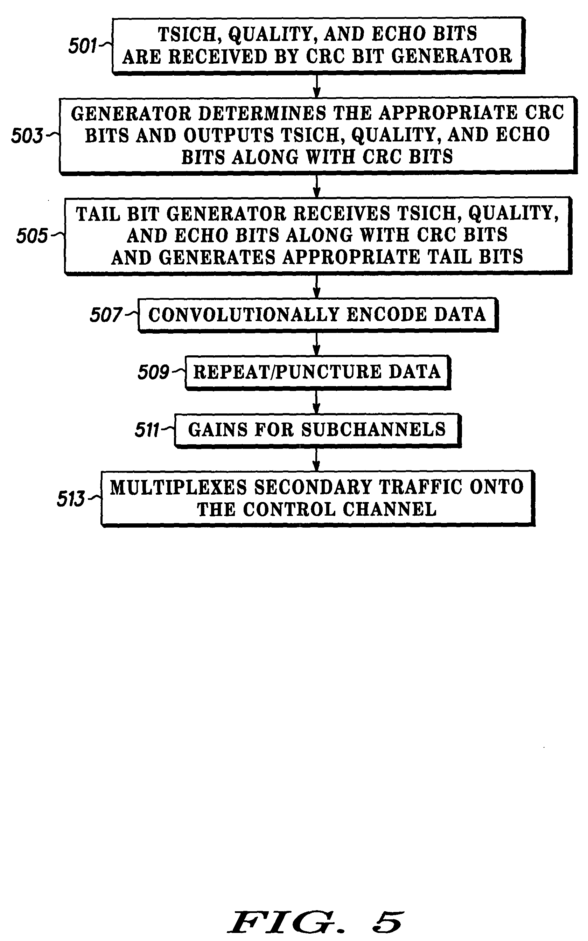

FIG. 4 illustrates a frame structure for a control channel in accordance with the preferred embodiment of the present invention. As is evident, R-AISCH is multiplexed into the prior-art information bits during a 1.25 ms slot. More particularly, the prior-art 1.25 ms slot where no transmission was taking place, is now being utilized for transmission of R-AISCH.

Because R-AISCH is now being transmitted over the control channel, the pilot channel structure is identical to that utilized in IS-2000. Therefore, backward compatibility with IS-2000 is achieved.

FIG. 5 is a flow chart showing operation of a reverse channel transmitter in accordance with the preferred embodiment of the present invention. The logic flow begins at step 501 where TSICH, Quality, and Echo bits are received by CRC bit generator 301. Generator 301 determines the appropriate CRC bits and outputs TSICH, Quality, and Echo bits along with CRC bits (step 503). At step 505 tail bit generator 303 receives TSICH, Quality, and Echo bits along with CRC bits and generates appropriate tail bits. The resulting data and tail bits are passed to convolutional encoder 305 where convolutional encoding takes place (step 507). More particularly, at step 507, convolutional encoder 305 encodes input data bits into data symbols at a fixed encoding rate with an encoding algorithm which facilitates subsequent maximum likelihood decoding of the data symbols into data bits (e.g. convolutional or block coding algorithms). For example, convolutional encoder 305 encodes 57 input data bits at a fixed encoding rate of one data bit to four data symbols (i.e., rate 1/4) such that convolutional encoder 305 outputs 228 data symbols.

The data symbols are then input into symbol repeater/puncturer 307 where the individual symbols are repeated and/or punctured in order to match the size of the physical channel (step 509). At the next step (step 511) the symbols are multiplied by a transmission gain factor by gain multiplier 313. Next, at step 513, multiplexer 309 multiplexes secondary traffic (e.g., R-AISCH) onto the control channel during a 1.25 ms slot. The resulting frame is output to spreader 311 where appropriate spreading takes place.

While the invention has been particularly shown and described with reference to a particular embodiment, it will be understood by those skilled in the art that various changes in form and details may be made therein without departing from the spirit and scope of the invention. It is intended that such changes come within the scope of the following claims.

## Claims

1. A control channel having a frame comprising:
a Reverse Transmitter Sector Indicator Subchannel (R-TSICH), wherein the R-TSICH is utilized by a mobile station to communicate a PN_OFFSET;
a Reverse Quality Indicator subchannel (R-Quality), wherein R-Quality used to deliver of forward channel quality feedback;
a Reverse Echo subchannel (R-Echo), wherein R-Echo is utilized to deliver forward link configuration information to assist in a fast cell site selection (FCSS) process; and
a Reverse Acknowledgement Indicator Sub-channel (R-AISCH), wherein the R-AISCH is utilized for the indication of successful reception from the mobile station.

2. The control channel of claim 1 wherein the R-AISCH is one-bit acknowledgement feedback.

3. A method for transmitting a control channel, the method comprising the steps of:
generating CRC bits for a Reverse Transmitter Sector Indicator Subchannel (R-TSICH), a Reverse Quality Indicator subchannel (R-Quality), and a Reverse Echo subchannel (R-Echo) to produce a Reverse Control Subchannel, wherein the R-TSICH is utilized by a mobile station to communicate a PN_OFFSET, R-Quality used to deliver of forward channel quality feedback, and R-Echo is utilized to deliver forward link configuration information to assist in a fast cell site selection (FCSS) process; and
multiplexing a Reverse Acknowledgement Indicator Sub-channel (R-AISCH) onto the Reverse Control Subchannel, wherein the R-AISCH is utilized for the indication of successful reception from the mobile station.

4. The method of claim 3 wherein the step of multiplexing the R-AISCH onto the Reverse Control Subchannel comprises the step of multiplexing a one-bit acknowledgement feedback onto the Reverse Control Subchannel.

5. A control channel having a frame comprising:
a Reverse Transmitter Sector Indicator Subchannel (R-TSICH) existing in a 3.75 ms portion of the frame, wherein the R-TSICH is utilized by a mobile station to communicate a PN_OFFSET;
a Reverse Quality Indicator subchannel (R-Quality) existing in the 3.75 ms portion of the frame, wherein R-Quality used to deliver of forward channel quality feedback;
a Reverse Echo subchannel (R-Echo) existing in the 3.75 ms portion of the frame, wherein R-Echo is utilized to deliver forward link configuration information to assist in a fast cell site selection (FCSS) process; and
a Reverse Acknowledgement Indicator Sub-channel (R-AISCH) existing in a 1.25 ms portion of the frame, wherein the R-AISCH is utilized for the indication of successful reception from the mobile station.

6. The control channel of claim 5 wherein the R-AISCH is one-bit acknowledgement feedback.
